**Europäisches Patentamt**

**European Patent Office**

**Office européen des brevets**

(11) Veröffentlichungsnummer : **0 503 222 A2**

(12) **EUROPÄISCHE PATENTANMELDUNG**

(21) Anmeldenummer : **91890254.5**

(22) Anmeldetag : **24.10.91**

(51) Int. Cl.⁵ : **A47J 45/10**

(30) Priorität : **25.10.90 AT 2156/90**

(43) Veröffentlichungstag der Anmeldung :
**16.09.92 Patentblatt 92/38**

(84) Benannte Vertragsstaaten :
**BE CH DE DK ES FR GB GR IT LI LU NL SE**

(71) Anmelder : **Hirl, Theodor**
**Leystrasse 42/6/46**
**A-1200 Wien (AT)**

(72) Erfinder : **Hirl, Theodor**
**Leystrasse 42/6/46**
**A-1200 Wien (AT)**

(54) **Haltezange für erwärmte, runde und gewölbte Gegenstände, insbesondere für Teller und Schüsseln.**

Die Erfindung betrifft eine Einrichtung zum Halten von Tellern, Schüsseln, Gläsern u. dgl. Geschirr, wobei zwei nach Art einer Zange oder Schere schwenkbar miteinander verbundene Arme vorgesehen sind, die im Bereich eines der freien Ende eines jeden Armes mit insbesondere schräg zur Schenkelebene der Arme angeordneten Greiffortsätze zum Hinterfassen des Geschirrandes vorgeschen sind.

FIG. 1

EP 0 503 222 A2

Einrichtung zum Halten von Tellern, Schüßeln, Gläsern u.dgl. Geschirr dadurch gekennenzeichnet ; daß zwei nach Art einer Zange oder Schere schwenkbar miteinander verbundene Arme (2,3) vorgesehen sind, die im Bereich eines der freien Ende freien Ende eines jedem Armes (2,3) mit insbesondere schräg zur Schwenkebene der Arme (2,3) angeordneten Greiffortsätze (4,5,4'5') zum Hinterfassen des Geschirrandes (6) vorgesehen sind.

Haltezange für erwärmte, runde und gewölbte Gegenstände, insbesondere für Teller und Schüsseln.

Es ist bisher keine Handhabe, bekannt, mit der man handelsübliches Geschirr wie Teller, Schüsseln, Gläser usw. , die im Micro-Herd erwärmt werden herauszunehmen, ohne sich die Finger zu verbrennen. Mit der hier beschriebenen Zange ist es möglich Teller Schüsseln usw. zu erfassen, aus dem Herd zu nehmen und sie an jedem anderen beliebigen Ort wieder abzustellen. Dies gilt natürlich auch für andere Feuerstellen wie Gas-oder elektrokocher.

Die Form der Zangenarme wurde so gewählt, daß der Rand des Geschirrs im Bereich des Gewerbes der Zange aufliegt und somit bei relativ geringem Schließdruck der Zange ein Auskippen aus der durch die Greiffinger gegebene Halterung ausschließt

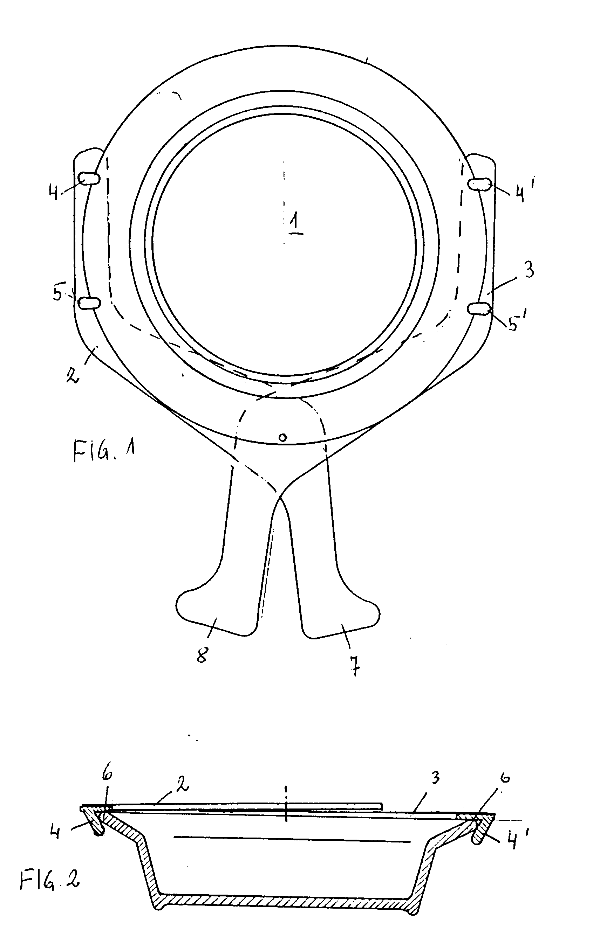

Fig. 1 zeigt in einer Sicht von unten einen Teller wie er von den Greiffingern (4,5, 4'5') der Zangenarme (2,3) am Rand umfaßt wird.

Fig, 2 zeigt in einem Schnitt an den Berührungsstellen der Greiffinger (4,5,4'5') mit dem Tellerrand (6) wie durch die Schrägstellung der Greiffinger (4,5,4'5') relativ zu den Ebenen der Zangenarme (2,3) der Te Teller (1) mit seinem Rand (6) durch zusammendrücken der Zangenarme (2,3) mittels der Griffe (7,8) gegen die Auflagenflächen der Zangenarme (2,3) und auch im Bereich des Gewerbes der Zange gedrückt wird.

**Patentansprüche**

1. Einrichtung zum Halten von Tellern, Shüsseln und dergleichen Geschirr, bei der zwei nach Art einer Zange oder Schere schwenkbar miteinander verbundenen Arme vorgesehen sind, deren jeder im Bereich eines der freien Enden mit Greiffortsätzen zum Hinterfassen des Geschirrandes versehen sind, dadurch gekennzeichnet, daß an jedem Arm zwei voneinander beabstandete Greiffortsätze vorgesehen sind, die aus der Schwenkebene (Normalebene zur Schwenkachse der Arme) vorspringen und bevorzugt spitze Winkel mit der Schwenkebene einschließen.

FIG. 1

FIG. 2